# EUROPEAN PATENT APPLICATION

(11) **EP 1 555 120 A1**
(43) Date of publication of application: **20.07.2005**
(21) Application number: 04075993.8
(22) Date of filing: 02.04.2004
(51) Int. Cl.: B32B 27/28, B65D 65/40

(54) **Use of a composite material for vacuum packaging fresh meat or fish**

(30) Priority: 13.01.2004 EP 04075020
(71) Applicant: Van den Broek, Adrianus Theodorus Josephus, 2380 Ravels (BE)
(72) Inventor: Van den Broek, Adrianus Theodorus Josephus, 2380 Ravels (BE)
(74) Representative: van der Kloet-Dorleijn, G.W.F.

(57) **Abstract**

The invention relates to the use of composite film material for vacuum packaging fresh meat or fish in a bag formed from said film material, said film material consisting of at least a barrier film and a sealant film layer, contacting the packaged meat or fish, and consisting of an acid copolymeric or ionomeric material having an acid content of 16 to 20 % by weight, to provide a shelf life of said packaged meat or fish of at least 15 days at a temperature of from 0 to 4 °C.

## Description

The present invention relates to the use of films comprising ethylene copolymer compositions for packaging fresh meat and fish.

More particularly, the ethylene copolymer compositions of the present invention are based on a copolymer of ethylene with carboxylic acid and partially neutralized with ions.

Ethylene copolymer compositions used in the present invention are well known in the packaging industry for the packaging of cooked and processed meat (Dupont Publication HS6747 9/94). Examples of such uses are as sealants or shrink film in mono- or multilayer films for food packaging or even, more specifically, as a sealant for secondary sealing to prevent meat juice from sweeping in between the two film layers, thus avoiding micro channel leakers. They are known for their alledged superior adhesion to cooked meat and are used in cooked ham and cooked Turkey packaging.

Further, it is known to use a composite film material having as an inner seal layer a film of a ionomeric material, having an acid content of up to 6 % by weight, a polyethylene or a metallocene layer. Such film materials, when used for packaging red fresh meat, nevertheless result in a darkening of the meat, when the packaged product is stored at refrigerature temperatures (i.e. 0 to 4 °C) for a period longer than 10 days.

Further, it is known from EP 1.175.340 to package fresh food by using a film structure having a food contact layer comprising a ionomer or an acid copolymer. More specifically, the food product is enclosed in said known film structure, followed by vacuum sealing and shrinking the film by applying heat.

This reference does, nevertheless, not mention or suggest that a shelf life of the packaged food (such as meat or fish) of at least 10 days at a temperature of from 0 to 4°C (refrigerator temperature) can be obtained by only vacuum packaging the food product, (so without any shrinkage of the film due to the application of heat), when the acid copolymeric or ionomeric material has a certain acid content.

It has now surprisingly found, that when the acid content of the inner seal layer is more than 16 % by weight, a favourable effect of the packaging material to the shelf life of the vacuum packaged articles is obtained. More specifically, it appeared that red meat retains its attractive red colour, contrary to the effect of the known packaging materials which result in a darkening of the red meat, if stored at refrigerator temperatures for more than 10 days.

The present invention thus relates to the use of a composite film material for vacuum packaging fresh meat or fish in a bag formed from said film material, said film material consists of at least a barrier film and a sealant film layer, which sealant film layer contacs the packaged meat or fish, and consists of an acid copolymeric or ionomeric material having an acid content of 16 to 20 % by weight, to provide a shelf life of said packaged meat or fish of at least 10 days, preferably at least 15 days at a temperature of from 0 to 4 °C.

Preferred embodiments of the present use are defined in claims 2-5.

The invention also relates to a method for packaging fresh meat or fish, as defined in claims 6-10.

### Detailed description of the invention

This invention consist of the use of ionomers with high acid comonomer content and neutralized with specific metal ions as sealant layers for multilayer films for fresh meat packaging. It has been found that for this use a copolymer of ethylene and an α,β-unsaturated C₃-C₈ carboxylic acid, preferably in an amount of 1-30% by weight, preferably acrylic acid or methacrylic acid, which carboxylic acid is partly neutralized with at least one metal ion, is most suitable. The copolymer may further contain an acrylate, and may be processed by e.g. extruding or casting a sheet or blowing a film.

The ionomer is described below:

### Acid Copolymer and Ionomer

The acid copolymers and ionomers of the present invention are derived from direct copolymers of ethylene and α,β-ethylenically-unsturated C₃-C₈ carboxylic acid ("ethylene-acid copolymers") by neutralization with metal ions.

By "direct copolymer", it is meant that the copolymer is made by polymerization of monomers together at the same time, as distinct from a "graft copolymer"where a monomer is attached or polymerized onto an existing polymer chain. Methods of preparing such ionomers are well known and are described in U.S.-A-3,264,272. Preparation of the direct ethylene-acid copolymers on which the ionomers are based is described in U.S.-A-4,351,931.

The ethylene-acid copolymers used to make the ionomeric copolymer of this invention can be E/X/Y copolymers where E is ethylene; X is a softening comonomer and Y is the α,β-ethylenically-unsaturated C₃-C₈ carboxylic acid, particularly acrylic or methacrylic acid. Preferably, however, the ethylene-acid copolymer is a dipolymer (no softening comonomer). The preferred acid moieties are methacrylic acid and acrylic acid.

By "softening", it is meant that the polymer is made less crystalline. Suitable "softening" comonomers (X) are monomers selected from alkyl acrylate, and alkyl methacrylate, wherein the alkyl groups have from 1 - 12 carbon atoms which, when present, may be up to 30 (preferably up to 15, most preferably up to 5) wt% of the ethylene-acid copolymer.

A wide range of percent acid moiety in the ethylene-acid copolymer may be used. The acid moiety may be present in a range of about 16 to 20 weight percent of the acid copolymer. The ethylene-acid copolymers with high levels of acid are difficult to prepare in continuous polymerizers because of monomer-polymer phase separation. This difficulty can be avoided however by use of "cosolvent technology" as described in U.S.-A-5.028.674 or by employing somewhat higher pressures than those at which copolymers with lower acid can be prepared.

The copolymer can be from about 10 to 99,5% neutralized with metal ions selected from groups Ia, Ib, IIa, IIIa, IVa, VIb and VIII of the Periodic Table of Elements such as sodium, potassium, zinc, calcium, magnesium, lithium, aluminum, nickel and chrominum. Preferred for the best effect for packaging meat are ions such as zinc, calcium or magnesium selected from groups IIa and IVa of the periodic table, most preferred is zinc. Such neutralized ethylene acid copolymers are known in the art as "ionomers". Typically, neutralization will be from 10-70%. Preferably the copolymer has from about 35 to 70% of the carboxylic acid groups ionized by neutralization with metal ions.

Preferred ethylene-acid dipolymers are ethylene/acrylic acid and ethylene/methacrylic acid. Specific other copolymers include ethylene/n-butyl acrylate/acrylic acid, ethylene/n-butyl acrylate/methacrylic acid, ethylene/iso-butyl acrylate/methacrylic acid, ethylene/iso-butyl acrylate/acrylic acid, ethylene/n-butyl methacrylate/methacrylic acid, ethylene/methyl methacrylate/acrylic acid.

Suitable ionomers for use in the present invention are commercially available under the trademark Surlyn® , suitable ethylene acid copolymers are available under the trademark Nucrel® , both from the DuPont Company.

### Films

For the present invention the aforementioned polymer is used as the sealant layer in a multilayer structure with at least 3 layers of the type X/tie/sealant, whereas X can represent one or more structural and barrier layers with an corresponding tie layers.

The sealant layer will be in contact with the fresh meat or fish. The structure can be made by the blown film or the cast sheet process or by laminating films together.

### Examples

The following materials were used:
- PA6:: Yltramid B35
- Surlyn:: 1857, tie layer for Surlyn to PA adhesion
- LDPE:: Stamylan from DSM
- EVA:: Elax from Dupont, having a MFI of 0,5-5 and containing 18% VA
Ionomer 1 Surlyn 9120, Zn based, 19% by weight methacrylic acid content and having a MFI of 1 at 190°C.

The aforementioned materials were fed to a 50 mm Reifenhauser extruder. This extruder was part of 3 layers Reifenhauser blown film line equipped with a Barmag 3 layer die, where the following 3 layer structure was prepared: PA6/TIE/Sealant

| | | |
|---|---|---|
| PA6 | fed to extruder 1 | 30 microns |
| Tie | fed to extruder 2 | 10 microns |
| Sealant | fed to extruder 3 | 50 microns |

The temperature profile that was extablished, was as follows:

| | 1 | 2 | 3 | 4 | 5 | Die |
|---|---|---|---|---|---|---|
| Extruder 1 | 220 | 220 | 230 | 240 | 240 | 240 |
| Extruder 2 | 170 | 180 | 190 | 200 | 210 | 220 |
| Extruder 3 | 180 | 190 | 200 | 210 | 220 | 230 |

Fresh red meat types, like beef, porc, veal, were vacuum packed on a commercial meat packaging equipment (multivac Type of Vacuum chamber), using one film as the upper and an other, sealant film as the lower web, contacting the meat.

Other type of meats or even parts of fish can be packed in the same manner.

Different types of parts of fresh red meat, porc, veal, and fish like cod parts, were packed in 3 different types of packaging material:
1. Trays of foamed plastic, lined with a PVC shrink film, and closed with the same shrink film.
2. So-called ATMOS pack, consisting of trays of foamed plastic, lined with a high-barrier material, and closed by a high-barrier closure film; filled with a gaseous mixture of N₂, CO₂ and O₂ (atmosphere like).
3. A composite film according to the invention, consisting of an outer layer of nylon (PA), a tie layer, a PE layer, a tie layer, and a ionomeric layer having an acid content of 19% by weight. This film was used in a deep drawing process for vacuum packaging the meat and fish products.

All packaged products were stored in a refrigerator (0-4°C) during several weeks. The appearance of the products was during this storage period visually evaluated by a panel of consumers, with the following results.
a. Products stored in trays of foamed plastic, lined with PVC shrink film, only had a shelf life of about 72 hours.
b. Products stored in ATMOS packs showed a shelf life of maximum 10 days.
c. Products packed in a composite film comprising a high-barrier layer and an inner sealant layer having an acid content of 19% by weight, showed a shelf life of more than 25 days for red meat, and more than 18 days for pork.

It is observed that the end of the shelf life was determined as the time at which the first signs of colour change were observed, which thus means a colour retention for red meat of 25 days and of other meat/fish products of at least 18 days.

Further, the same favourable results were obtained when flesh or fowl were packed in a composite film according to the invention.

Further, the above-mentioned composite film according to the invention, was modified such that the ionomeric film had an acid content of 15% b.w., 16% b.w., and 20% b.w., respectively. The composite films having an acid content of 16% b.w. and of 20% b.w. gave the same favourable results as indicated above, while an acid content of 15% b.w. did not give such results.

The films according to the invention can be made in a coextrusion process, a blowing extrusion process or a casting extrusion process, for example.

The composite film of the invention can have from minimum 3 to 10 or more different layers, for use in deep drawing, lidding film or vacuum pouches.

The sealant materials of the invention can thus be used as sealing materials in; optionally thermoformable, shrink films which can optionally be also oriented or bi-oriented, together with at least one other structural or barrier layer and tie layer. Examples include structures such as PA/tie/sealant, LDPE/tie/EVOH/tie/sealant, sealant/tie/EVOH/tie/sealant or PA/tie/EVOH/tie/sealant. EVOH is ethylene vinylalcohol copolymer, a common oxygen barrier layer used in meat packaging instead of the more commonly used polyamide.

## Claims

1. Use of a composite film material for vacuum packaging fresh meat or fish in a bag formed from said film material, said film material consisting of at least a barrier film and a sealant film layer, which sealant film layer contacts the packaged meat or fish, and consists of an acid copolymeric or ionomeric material having an acid content of 16 to 20 % by weight, to provide a shelf life of said packaged meat or fish of at least 15 days at a temperature of from 0 to 4 °C.

2. Use according to claim 1, wherein the ionomer sealant layer is a copolymer of ethylene and 1 to 30% α,β-unsaturated C₃-C₈ carboxylic acid, the acid groups being neutralised from 10-99,5% with metal ions chosen from Na, K, Li, Mg, Ca or Zn.

3. Use according to claim 2, wherein the α,β-unsaturated C₃-C₈ carboxylic acid is present in an amount of from 16-20%.

4. Use according to the claims 2 or 3, wherein the metal is Zn.

5. Use according to the claims 1 to 4, wherein the acid copolymer or ionomer further contains a softening comonomer, selected from a (C₁-C₁₂) alkyl (meth) acrylate.

6. A method for packaging fresh meat or fish to obtain a refrigerated shelf life of at least 15 days, consisting of enclosing the meat or fish within a film structure consisting of at least a barrier film and a sealant film layer, which sealant film layer contacts the packaged meat or fish, and vacuum sealing the film structure, to achieve a sealed pouch encasing the meat or fish, wherein said sealant film layer consists of an acid copolymeric or ionomeric material having an acid content of 16 to 20% by weight.

7. A method according to claim 6, wherein the ionomer sealant layer is a copolymer of ethylene and 1 to 30% α,β-unsaturated C₃-C₈ carboxylic acid, the acid groups being neutralised from 10-99,5% with metal ions chosen from Na, K, Li, Mg, Ca or Zn.

8. A method according to claim 7, wherein the α,β-unsaturated C₃-C₈ carboxylic acid is present in an amount of from 16-20%.

9. A method according to claim 7 or 8, wherein the metal is Zn.

10. A method according to claim 6-9, wherein the acid copolymer or ionomer further contains a softening comonomer, selected from a (C₁-C₁₂) alkyl (meth) acrylate.
